# EUROPÄISCHE PATENTSCHRIFT

(11) **EP 2 066 919 B1**
(45) Veröffentlichungstag und Bekanntmachung des Hinweises auf die Patenterteilung: **27.10.2010**
(21) Anmeldenummer: 07803535.9
(22) Anmeldetag: 17.09.2007
(51) Int. Cl.: F16H 1/32, F16H 37/04, F16H 37/06

(54) **MEHRSTUFIGES UNTERSETZUNGSGETRIEBE**
MULTI-SPEED REDUCTION GEAR
DÉMULTIPLICATEUR À PHASE MULTIPLE

(30) Priorität: 30.09.2006 DE 102006046581
(43) Veröffentlichungstag der Anmeldung: 10.06.2009
(73) Patentinhaber: ZF Friedrichshafen AG, 88038 Friedrichshafen (DE); KUKA Roboter GmbH, 86165 Augsburg (DE)
(72) Erfinder: PESCHECK, Jürgen, 88090 Immenstaad (DE); SCHULZ, Horst, 88045 Friedrichshafen (DE); KIRSCHNER, Tino, 88142 Wasserburg (DE); WEISS, Martin, 88677 Markdorf (DE); KRUMBACHER, Rainer, 87675 Rettenbach a. A. (DE); MARKERT, Joachim, 86163 Augsburg (DE)
(86) Internationale Anmeldenummer: PCT/EP2007/059791
(87) Internationale Veröffentlichungsnummer: WO 2008/037618

(56) Entgegenhaltungen:
- EP-A- 0 300 905
- DE-A1- 2 338 193
- DE-A1- 3 903 517
- DE-A1- 19 844 658

## Beschreibung

Die vorliegende Erfindung betrifft ein mehrstufiges Untersetzungsgetriebe gemäß dem Oberbegriff des Patentanspruchs 1.

Aus der DE 2420232 A1 ist ein zweistufiges Untersetzungsgetriebe bekannt, bei dem eine erste Untersetzungsstufe als Planetengetriebe ausgebildet ist und bei dem eine zweite Untersetzungsstufe drei Ritzel umfasst, die an jeweils unterschiedlichen Stellen am Umfang in Zahneingriff mit einem Großrad stehen und von denen ein erstes Ritzel drehfest mit dem Planetenträger des Planetengetriebes verbunden ist und die beiden anderen Ritzel über eine Stirnradstufe trieblich mit dem Hohlrad des Planetengetriebes verbunden sind.

Des Weiteren ist aus der EP 0300905 A1 ein Untersetzungsgetriebe bekannt, bei dem eine erste Untersetzungsstufe als Planetengetriebe ausgeführt ist. Das Planetengetriebe weist ein antreibbares Sonnenrad auf, sowie mehrere, in einem drehbar gelagerten Planetenträger drehbar gelagerte Planetenräder. Die Planetenräder stehen in gleichzeitigem Zahneingriff mit dem Sonnenrad und einem ebenfalls drehbar gelagerten Hohlrad. Eine zweite Untersetzungsstufe umfasst mindestens zwei Ritzel, die beide an unterschiedlichen Stellen am Umfang in Zahneingriff mit einem Großrad stehen. Das erste der beiden Ritzel ist drehfest mit dem genannten Planetenträger der ersten Untersetzungsstufe verbunden. Das zweite Ritzel ist über eine weitere Zahnradstufe trieblich mit dem genannten Hohlrad der ersten Untersetzungsstufe verbunden. Das Großrad bildet den Abtrieb des Untersetzungsgetriebes und ist, wie auch die beiden Ritzel, in einem feststehenden Gehäuse gelagert.

Bei relativ kompakter Bauform können mit einem derartigen Getriebe sehr hohe Drehmomente hochübersetzend übertragen werden.

Der vorliegenden Erfindung liegt die Aufgabe zugrunde, ein gattungsgemäßes Untersetzungsgetriebe weiterzuentwickeln.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein mehrstufiges Untersetzungsgetriebe vorgeschlagen, bei dem eine erste Untersetzungsstufe als Planetengetriebe ausgebildet ist, mit einem antreibbaren ersten Sonnenrad, mit mehreren in einem ersten drehbar gelagerten Planetenträger drehbar gelagerten ersten Planetenrädern, die in gleichzeitigem Zahneingriff mit dem ersten Sonnenrad und einem ebenfalls drehbar gelagerten ersten Hohlrad stehen, bei dem eine zweite Untersetzungsstufe mindestens zwei Ritzel umfasst, die beide an unterschiedlichen Stellen am Umfang in Zahneingriff mit einem Großrad stehen und von denen ein erstes Ritzel drehfest mit dem ersten Planetenträger verbunden ist und mindestens ein zweites Ritzel über eine drehrichtungsumkehrende Zahnradstufe trieblich mit dem ersten Hohlrad verbunden ist.

Erfindungsgemäß ist das Großrad als Stator, also feststehend, ausgebildet, während der Abtrieb gebildet wird durch eine Baugruppe, in welcher auch die Ritzel gelagert sind, so dass die Ritzel im Betrieb in der Weise von Planetenrädern die Zentralachse des Großrads umkreisen. Funktionselemente wie elektrische Antriebsmotoren und damit verbundene Getriebeteile bewegen sich also im Betrieb um die Zentralachse des Großrads. In vorteilhafter Weise können diese Funktionselemente an Stellen untergebracht werden, wo ansonsten ungenutzter Bauraum vorhanden wäre, so dass sich insgesamt günstige Bauraumverhältnisse erzielen lassen.

Bei einer vorteilhaften Ausgestaltung der Erfindung weist das Großrad einen Zentraldurchlass auf, der für die Durchführung von Versorgungs- und Steuerleitungen nutzbar ist.

Bei einer weiteren vorteilhaften Ausgestaltung der Erfindung ist mindestens ein weiteres gleichartiges Untersetzungsgetriebe vorhanden, wobei die mindestens zwei Untersetzungsgetriebe ein gemeinsames Großrad aufweisen. Dies ist deshalb möglich, weil die ersten Untersetzungsstufen gegenüber der Mittelachse des Großrads nach außen radial versetzt an einer Stelle des Umfangs des Großrads angeordnet sind. Je nach Umfangsgröße des Großrads können bei entsprechenden Drehmomentanforderungen also zwei, drei oder mehrere erste Untersetzungsstufen am Umfang des Großrades verteilt angeordnet werden. Jeder ersten Untersetzungsstufe kann dabei ein eigener elektrischer Antriebsmotor zugeordnet sein, so dass insgesamt mit der Zahl der ersten Untersetzungsstufen auch die Gesamtleistung des so gebildeten Antriebssystems entsprechend steigt. Dieses System kann auch so beschrieben werden, dass mehrere "Antriebseinheiten" sich über jeweils mindestens zwei Ritzel auf dem gemeinsamen Großrad abstützen. Jede dieser "Antriebseinheiten" umfasst jeweils das Planetengetriebe, die Ritzel und die drehrichtungsumkehrende Zahnradstufe.

Bei vielen Anwendungen, die ein großes Großrad aufweisen, beispielsweise auch der Drehantrieb für einen Panzerturm oder der Drehantrieb eines Lastkrans, ist es so möglich, unter Verwendung von mehreren baugleichen und daher kostengünstigeren "Antriebseinheiten", die benötigte Antriebsleistung bereitzustellen. Ein zusätzlicher Vorteil ist die erhöhte Betriebssicherheit aufgrund von Redundanz.

Für Präzisionsanwendungen als Robotergetriebe, bei denen es auf Spielfreiheit und flexible Zuleitungsführung ankommt, können die Ritzel und das Großrad konisch ausgebildet sein, wobei Einstellmittel für die Einstellung der Axialposition jedes Ritzels gegenüber dem Großrad vorhanden sind.

Sind höhere Gesamtübersetzungen gefordert, kann der ersten Untersetzungsstufe eine weitere als Planetenstufe ausgebildete Untersetzungsstufe vorgeschaltet sein, wobei ein zweiter Planetenträger drehfest mit dem ersten Sonnenrad verbunden ist, zweite Planetenräder im zweiten Planetenträger drehbar gelagert sind und in ständigem Zahneingriff mit einem drehantreibbaren zweiten Sonnenrad und einem mit dem ersten Hohlrad drehfest verbundenen, zweiten Hohlrad stehen.

Diese Vorschaltstufe ist insbesondere dann kostengünstig herstellbar, wenn das erste und das zweite Hohlrad als ein einziges Hohlradbauteil ausgebildet sind, wobei die ersten und die zweiten Planetenräder mit ihren Verzahnungen an unterschiedlichen axialen Bereichen des Hohlradbauteils eingreifen oder gar das Hohlradbauteil eine durchgehende Verzahnung aufweist.

Das Großrad und die Ritzel können, um besonderen Einbauverhältnissen Rechnung zu tragen, auch als Kegelräder mit nichtparallelen Drehachsen ausgebildet sein.

Besonders vorteilhafte Verhältnisse ergeben sich, wenn beide Ritzel die gleiche Zähnezahl aufweisen und wenn die drehrichtungsumkehrende Zahnradstufe im Verhältnis (u/(u+1)) ins Langsame untersetzt ist, wobei u dem Verhältnis der Hohlrad- zu Sonnenrad-Zähnezahl beim vorgeschalteten Planetengetriebe entspricht.

Die Erfindung wird im Folgenden anhand der beigefügten Figuren beispielhaft näher erläutert.
Es zeigen:
- Fig. 1: einen Längsschnitt eines erfindungsgemäßenGetriebes;
- Fig. 2: eine schematische Draufsicht auf ein erfindungsgemäßes Getriebe;
- Fig. 3: eine schematische 3D Ansicht auf ein erfindungsgemäßes Getriebe und
- Fig. 4: eine Draufsicht auf ein erfindungsgemäßes Getriebe.

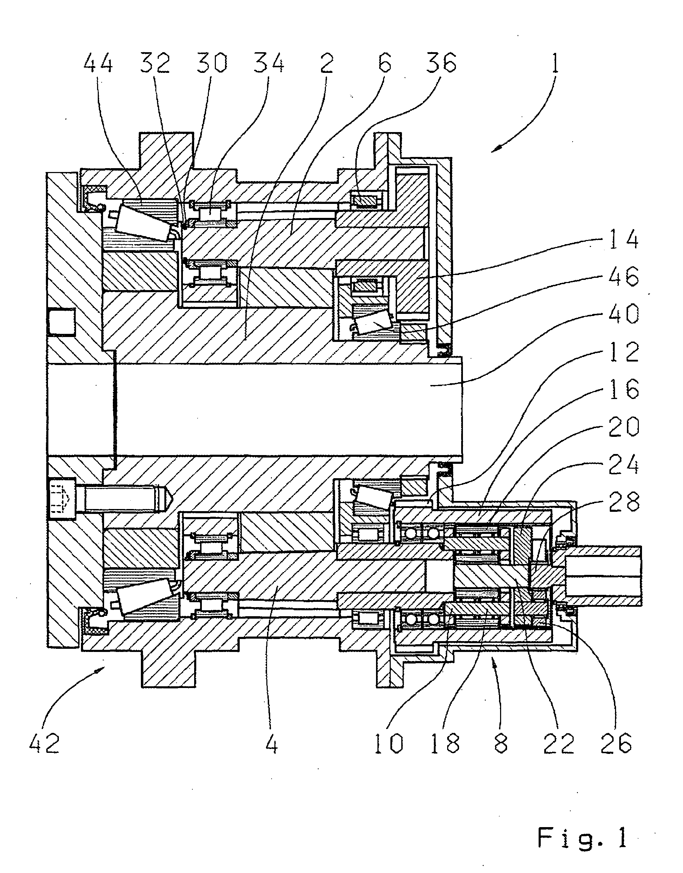

Fig. 1 zeigt ein mehrstufiges Untersetzungsgetriebe 1. Eine erste Untersetzungsstufe wird gebildet aus einem Planetengetriebe 8, während eine zweite Untersetzungsstufe zwei Ritzel 4, 6 umfasst, die mit einem Großrad 2 an unterschiedlichen Stellen am Umfang des Großrades in Eingriff sind. Dabei ist das erste Ritzel 4 drehfest verbunden mit einem Planetenträger 10 des Planetengetriebes 8 und das zweite Ritzel ist über eine von Stirnrädern 12, 14 gebildete Stirnradstufe in trieblicher Verbindung mit einem Hohlrad 16 des Planetengetriebes 8. Ober- und unterhalb der Mittellinie in Fig. 1 sind verschiedene Schnittebenen gezeigt.

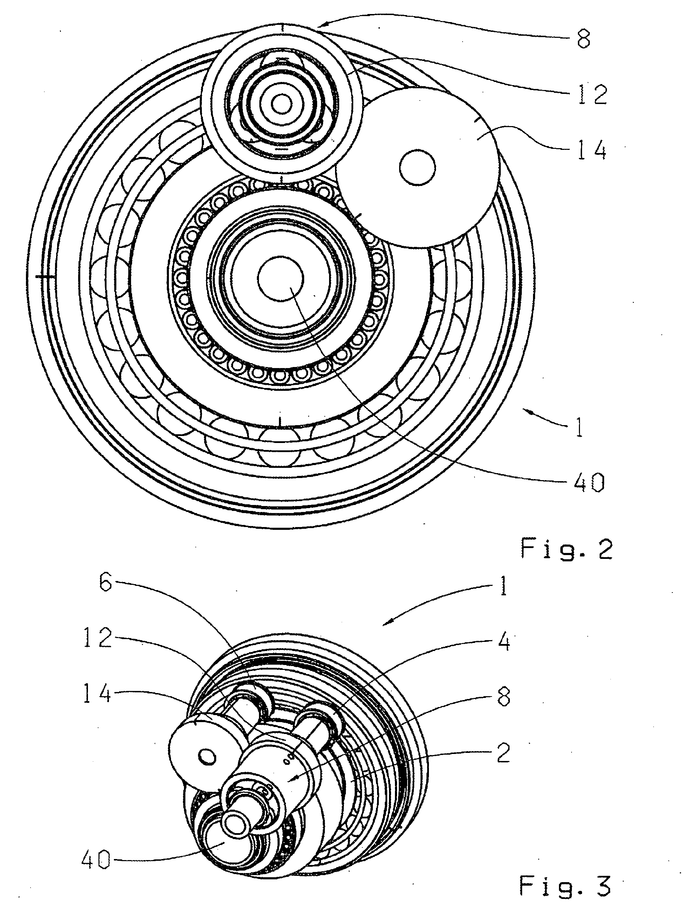

Aus Fig. 2 und 3 ist die Lage der Stirnräder 12, 14 zueinander ersichtlich, die miteinander in Eingriff sind.

Das Planetengetriebe 8 wirkt also als Differentialgetriebe, bei dem Planetenträger 10 und Hohlrad 16 über die Stirnradstufe 12, 14, die Ritzel 4 und das Großrad 2 miteinander trieblich gekoppelt sind.

In dem Planetenträger 10 sind auf Planetenbolzen 18 Planetenräder 20 drehbar gelagert welche in gleichzeitigem Zahneingriff mit dem Hohlrad 16 und einem Sonnenrad 22 stehen.

Bei dem gezeigten erfindungsgemäßen Getriebe ist das Großrad als Stator, also feststehend ausgebildet, während die Baugruppe 42 um das Großrad drehbar ist. Damit ist es vorteilhaft bei einem Roboter für die sogenannte "Achse 1" verwendbar, wobei das Großrad mit dem Fundament verbunden wird.

Dem aus Sonnenrad 22, Planetenrädern 20 und Hohlrad 16 gebildeten Planetengetriebe 8 ist eine weitere, als Planetenstufe ausgebildete Untersetzungsstufe vorgeschaltet. Diese umfasst die auf dem Planetenträger 24 gelagerten Planetenrader 26, die in gleichzeitigem Zahneingriff mit dem von einem nicht gezeigten Elektromotor antreibbaren Sonnenrad 28 und dem Hohlrad 16 stehen.

Dabei sind die Hohlräder der beiden Planetenstufen drehfest miteinander verbunden. In der dargestellten Ausführungsform sind die Hohlräder in einem Hohlradbauteil 16 vereint, welches sogar eine durchgehende Verzahnung aufweist. Die Planetenräder 20 und 26 sind also an unterschiedlichen axialen Bereichen desselben Hohlrads 16 mit diesem in Eingriff.

Die Tatsache, dass das Hohlrad während des Betriebes nicht stillsteht, wirkt sich dabei in vorteilhafter Weise auf die Übersetzung der vorgeschalteten Planetenstufe aus.

Sowohl die Ritzel 4, 6 als auch das Großrad sind konisch ausgebildet. Einstelischeiben 30, welche zwischen dem Sprengring 32 und dem Lagerinnenring des Ritzelagers 34 angeordnet sind, dienen als Einstellmittel für die Einstellung der Axialposition jedes Ritzels gegenüber dem Großrad. Damit kann das Verzahnungsspiel zwischen Ritzel und Großrad, das sich auf das Gesamtspiel des Getriebes am stärksten auswirkt, eingestellt bzw. eliminiert werden, so dass eine für ein Robotergetriebe notwendige Präzision erreicht wird. Für die Ritzel 4, 6 ist jeweils noch ein zweites Lager 36 auf der anderen Seite der Verzahnungsebene angeordnet, welches axial zwischen dem Ritzel und der Verzahnungsebene der Stirnräder 12, 14 angeordnet ist.

Das Großrad weist einen Zentraldurchlass 40 auf, der bei einem Robotergetriebe zur Durchführung von Steuer und Versorgungsleitungen genutzt werden kann.

Zwischen dem Großrad 2 und der relativ zum Großrad verdrehbaren Baueinheit 42, in welcher auch die Ritzel gelagert sind, sind zwei axial angestellte Lager 44, 46 in O-Anordnung vorhanden. Diese Art der Lagerung ist präzise und erlaubt hohe Axial- und Querkräfte abzustützen.

Gleiche Positionen sind in den weiteren Figuren mit gleichen Bezugsziffern versehen.

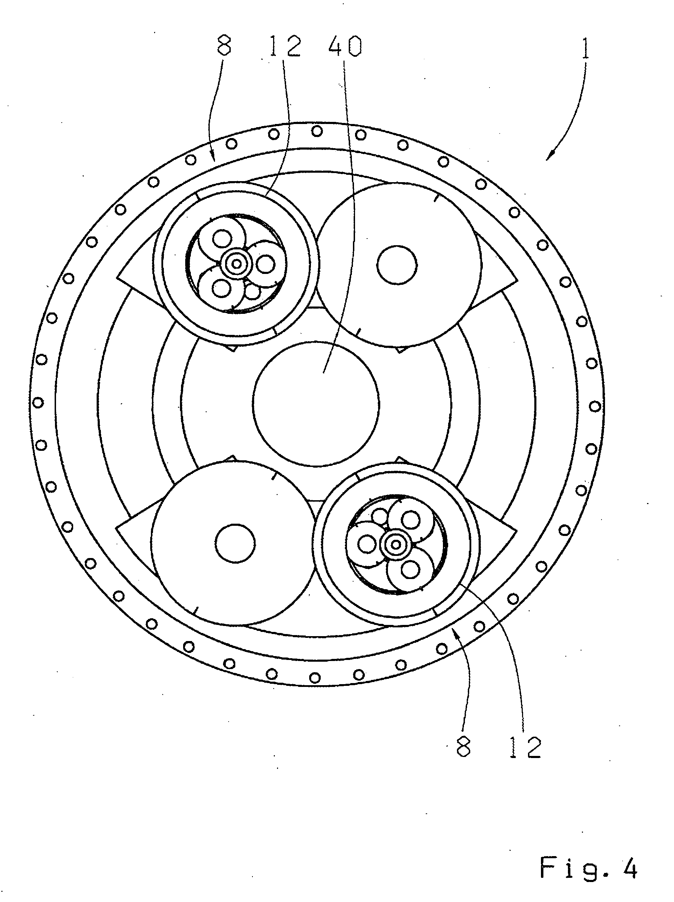

Fig. 4 zeigt in der Draufsicht schematisch ein erfindungsgemäßes Getriebe. Bei diesem teilen zwei gleichartige Untersetzungsgetriebe ein gemeinsames Großrad, so dass nicht nur zwei sondern vier Ritzel mit dem Großrad kämmen. Auf diese Weise wird eine Verdoppelung des übertragbaren Drehmoments und der übertragbaren Leistung erzielt. Bei dem in Fig. 4 gezeigten Getriebe ist das Großrad als Stator ausgebildet. Die am Umfang verteilten Bohrungen dienen zur Befestigung des Getriebes am Fundament.

### Bezugszeichen

- 1: Untersetzungsgetriebe
- 2: Großrad
- 4: Ritzel
- 6: Ritzel
- 8: Planetengetriebe
- 10: Planetenträger
- 12: Stirnrad
- 14: Stirnrad
- 16: Hohlrad
- 18: Planetenbolzen
- 20: Planetenrad
- 22: Sonnenrad
- 24: Planetenträger
- 26: Planetenrad
- 28: Sonnenrad
- 30: Einstellscheibe
- 32: Sprengring
- 34: Lager
- 36: Lager
- 40: Zentraldurchlass
- 42: Baueinheit
- 44: Lager
- 46: Lager

## Patentansprüche

1. Mehrstufiges Untersetzungsgetriebe bei dem eine erste Untersetzungsstufe als Planetengetriebe ausgebildet ist, mit einem antreibbaren ersten Sonnenrad (22), mit mehreren in einem ersten drehbar gelagerten Planetenträger drehbar gelagerten ersten Planetenrädern (10), die in gleichzeitigem Zahneingriff mit dem ersten Sonnenrad (22) und einem ebenfalls drehbar gelagerten ersten Hohlrad (16) stehen, bei dem eine zweite Untersetzungsstufe mindestens zwei Ritzel (4, 6) umfasst, die beide an unterschiedlichen Stellen am Umfang in Zahneingriff mit einem Großrad (2) stehen und von denen ein erstes Ritzel (4) drehfest mit dem ersten Planetenträger (10) verbunden ist und mindestens ein zweites Ritzel (6) über eine drehrichtungsumkehrende Zahnradstufe (12, 14) trieblich mit dem ersten Hohlrad (16) verbunden ist, **dadurch gekennzeichnet, dass** das Großrad (2) als Stator ausgebildet ist und der Abtrieb gebildet wird durch eine Baugruppe, in welcher auch die Ritzel (4, 6) gelagert sind, so dass die Ritzel im Betrieb in der Weise von Planetenrädern die Zentralachse des Großrads umkreisen.

2. Untersetzungsgetriebe nach Anspruch 1, **dadurch gekennzeichnet, dass** das Großrad (2) einen Zentraldurchlass (40) aufweist.

3. Untersetzungsgetriebe nach Anspruch 1 oder 2, **dadurch gekennzeichnet, dass** mindestens ein weiteres gleichartiges Untersetzungsgetriebe vorhanden ist, wobei die mindestens zwei Untersetzungsgetriebe ein gemeinsames Großrad (2) aufweisen.

4. Untersetzungsgetriebe nach einem der vorangehenden Ansprüche, **dadurch gekennzeichnet, dass** die Ritzel (4, 6) und das Großrad (2) konisch ausgebildet sind und dass Einstellmittel (30) für die Einstellung der Axialposition jedes Ritzels (4, 6) gegenüber dem Großrad (2) vorhanden sind.

5. Untersetzungsgetriebe nach einem der vorangehenden Ansprüche, **dadurch gekennzeichnet , dass** der ersten Untersetzungsstufe eine weitere als Planetenstufe ausgebildete Untersetzungsstufe vorgeschaltet ist, wobei ein zweiter Planetenträger (24) drehfest mit dem ersten Sonnenrad (22) verbunden ist, zweite Planetenräder (26) im zweiten Planetenträger (24) drehbar gelagert sind und in ständigem Zahneingriff mit einem drehantreibbaren zweiten Sonnenrad (28) und einem mit dem ersten Hohlrad (16) drehfest verbundenen, zweiten Hohlrad (16) stehen.

6. Untersetzungsgetriebe nach einem der vorangehenden Ansprüche, **dadurch gekennzeichnet, dass** das erste und das zweite Hohlrad als ein einziges Hohlradbauteil (16) ausgebildet sind, wobei die ersten und die zweiten Planetenräder mit ihren Verzahnungen an unterschiedlichen axialen Bereichen des Hohlradbauteils eingreifen.

7. Untersetzungsgetriebe nach Anspruch 6, **dadurch gekennzeichnet, dass** das Hohlradbauteil (16) eine durchgehende Verzahnung aufweist.

8. Untersetzungsgetriebe nach einem der vorangehenden Ansprüche, **dadurch gekennzeichnet, dass** das Großrad (3) und die Ritzel als Kegelräder mit nichtparallelen Drehachsen ausgebildet sind.

9. Untersetzungsgetriebe nach einem der vorangehenden Ansprüche, **dadurch gekennzeichnet, dass** beide Ritzel (4, 6) der Abtriebsstufe die gleiche Zähnezahl aufweisen und dass die umkehrende Stirnrad- bzw. Kegelrad-Stufe (12. 14) im Verhältnis (u/(u+1)) ins Langsame untersetzt ist, wobei u dem Verhältnis der Hohlrad- zu Sonnenrad-Zähnezahl beim vorgeschalteten Planetensatz entspricht.

## Claims

1. Multi-stage reduction gear unit in which a first reduction gear stage is embodied as a planetary gear mechanism, having a drivable, first sun gear (22), having a plurality of first planetary gears (10) which are rotatably mounted in a first rotatably mounted planetary carrier and are in simultaneous toothed engagement with the first sun gear (22) and a first ring gear (16) which is also rotatably mounted, in which multi-stage reduction gear unit a second reduction gear stage comprises at least two pinions (4, 6) which are both in toothed engagement at different locations on the circumference with a large gear (2) and a first pinion (4) of which is connected in a rotationally fixed fashion to the first planetary carrier (10), and at least a second pinion (6) of which has a drive connection to the first ring gear (16) via a rotational-direction-reversing gear wheel stage (12, 14), **characterized in that** the large gear (2) is embodied as a stator, and the output is formed by an assembly in which the pinions (4, 6) are also mounted, with the result that during operation the pinions circulate in the manner of planetary gears around the central axis of the large gear.

2. Reduction gear unit according to Claim 1, **characterized in that** the large gear (2) has a central passage (40).

3. Reduction gear unit according to Claim 1 or 2, **characterized in that** at least a further gear unit of the same type is present, wherein the at least two reduction gear units have a common large gear (2).

4. Reduction gear unit according to one of the preceding claims, **characterized in that** the pinions (4, 6) and the large gear (2) are of conical design, and **in that** setting means (30) for setting the axial position of each pinion (4, 6) with respect to the large gear (2) are present.

5. Reduction gear unit according to one of the preceding claims, **characterized in that** a further reduction gear stage which is embodied as a planetary stage is connected upstream of the first reduction gear stage,
wherein a second planetary carrier (24) is connected in a rotationally fixed fashion to the first sun gear (22), second planetary gears (26) are rotatably mounted in the second planetary carrier (24) and are in continuous toothed engagement with a rotationally driven second sun gear (28) and a second ring gear (16) which is connected to the first ring gear (16) in a rotationally fixed fashion.

6. Reduction gear unit according to one of the preceding claims, **characterized in that** the first and second ring gears are embodied as a single ring gear component (16), wherein the first and the second planetary gears engage with their toothing arrangements on different axial regions of the ring gear component.

7. Reduction gear unit according to Claim 6, **characterized in that** the ring gear component (16) has a continuous toothing arrangement.

8. Reduction gear unit according to one of the preceding claims, **characterized in that** the large gear (3) and the pinions are embodied as bevel gears with non-parallel rotational axes.

9. Reduction gear unit according to one of the preceding claims, **characterized in that** both pinions (4, 6) of the output stage have the same number of teeth, and **in that** the reversing spur gear stage or bevel gear stage (12, 14) is stepped down with the ratio (u/(u+1)), where u corresponds to the ratio of the number of teeth of the ring gear to the number of teeth of the sun gear in the planetary set which is connected upstream.

## Revendications

1. Démultiplicateur à plusieurs étages, dans lequel un premier étage de démultiplication est réalisé sous forme d'engrenage planétaire, avec une première roue solaire (22) pouvant être entraînée, avec plusieurs premières roues planétaires (10) montées à rotation dans un premier porte-planétaire monté à rotation, qui sont en prise d'engrènement simultané avec la première roue solaire (22) et avec une première couronne (16) également montée à rotation, un deuxième étage de démultiplication comprenant au moins deux pignons (4, 6), qui sont tous les deux en prise d'engrènement avec une roue d'engrenage (2) en différents endroits de la périphérie, et dont un premier pignon (4) est connecté de manière solidaire en rotation au premier porte-planétaire (10) et dont au moins un deuxième pignon (6) est connecté par entraînement à la première couronne (16) par le biais d'un étage de roue dentée (12, 14) inversant le sens de rotation, **caractérisé en ce que** la roue d'engrenage (2) est réalisée sous forme de stator et la prise de force est réalisée par un module dans lequel sont également montés les pignons (4, 6), de sorte que les pignons entourent l'axe central de la roue d'engrenage à la manière de roues planétaires pendant le fonctionnement.

2. Démultiplicateur selon la revendication 1, **caractérisé en ce que** la roue d'engrenage (2) présente un passage central (40).

3. Démultiplicateur selon la revendication 1 ou 2, **caractérisé en ce qu'**au moins un autre démultiplicateur de même type est prévu, et les au moins deux démultiplicateurs présentent une roue d'engrenage commune (2).

4. Démultiplicateur selon l'une quelconque des revendications précédentes, **caractérisé en ce que** les pignons (4, 6) et la roue d'engrenage (2) sont réalisés sous forme conique et **en ce que** des moyens d'ajustement (30) pour l'ajustement de la position axiale de chaque pignon (4,6) par rapport à la roue d'engrenage (2) sont prévus.

5. Démultiplicateur selon l'une quelconque des revendications précédentes, **caractérisé en ce que** le premier étage de démultiplication est suivi d'un étage de démultiplication supplémentaire qui est réalisé sous forme d'étage planétaire, un deuxième porte-planétaire (24) étant connecté de manière solidaire en rotation à la première roue solaire (22), des deuxièmes roues planétaires (26) étant montées à rotation dans le deuxième porte-planétaire (24) et étant en prise d'engrènement constant avec une deuxième roue solaire (28) pouvant être entraînée en rotation, et avec une deuxième couronne (16) connectée de manière solidaire en rotation à la première couronne (16).

6. Démultiplicateur selon l'une quelconque des revendications précédentes, **caractérisé en ce que** la première et la deuxième couronnes sont réalisées sous forme d'un composant de couronne unique (16), les premières et deuxièmes roues planétaires venant en prise avec leurs dentures dans des régions axiales différentes du composant de couronne.

7. Démultiplicateur selon la revendication 6, **caractérisé en ce que** le composant de couronne (16) présente une denture continue.

8. Démultiplicateur selon l'une quelconque des revendications précédentes, **caractérisé en ce que** la roue d'engrenage (3) et les pignons sont réalisés sous forme de roues coniques avec des axes de rotation non parallèles.

9. Démultiplicateur selon l'une quelconque des revendications précédentes, **caractérisé en ce que** les deux pignons (4, 6) de l'étage de prise de force présentent le même nombre de dents et **en ce que** l'étage d'engrenage droit ou conique (12, 14) inversant le sens de rotation est démultiplié dans un rapport (u/(u+1)), u correspondant au rapport du nombre de dents de la couronne à la roue solaire pour un train planétaire monté en amont.
